(19) **Europäisches Patentamt / European Patent Office / Office européen des brevets**

(11) **EP 2 018 688 B1**

(12) # FASCICULE DE BREVET EUROPEEN

(45) Date de publication et mention
de la délivrance du brevet:
**16.06.2010 Bulletin 2010/24**

(21) Numéro de dépôt: **07731230.4**

(22) Date de dépôt: **30.03.2007**

(51) Int Cl.:
***H01S 3/098*** (2006.01)

(86) Numéro de dépôt international:
**PCT/FR2007/000551**

(87) Numéro de publication internationale:
**WO 2007/118980 (25.10.2007 Gazette 2007/43)**

(54) **DISPOSITIF LASER CONTINU POMPE PAR DIODE COMPRENANT DEUX FILTRES**

DIODENGEPUMPTE DAUERLASEREINRICHTUNG MIT ZWEI FILTERN

DIODE PUMPED CONTINUOUS LASER DEVICE INCLUDING TWO FILTERS

(84) Etats contractants désignés:
**AT BE BG CH CY CZ DE DK EE ES FI FR GB GR
HU IE IS IT LI LT LU LV MC MT NL PL PT RO SE
SI SK TR**

(30) Priorité: **31.03.2006 FR 0602794**

(43) Date de publication de la demande:
**28.01.2009 Bulletin 2009/05**

(73) Titulaire: **Oxxius
22300 Lannion (FR)**

(72) Inventeur: **GEORGES, Thierry
F-22700 Perros Guirec (FR)**

(74) Mandataire: **Pontet, Bernard
Pontet Allano & Associés s.e.l.a.r.l.
25, Rue Jean Rostand
Parc Club Orsay Université
91893 Orsay Cedex (FR)**

(56) Documents cités:
**EP-A2- 0 712 183     FR-A1- 2 860 928
US-A- 5 206 867     US-A- 5 263 038**

- **PREUSS D R ET AL: "THREE-STAGE
BIREFRINGENT FILTER TUNING SMOOTHLY
OVER THE VISIBLE REGION: THEORETICAL
TREATMENT AND EXPERIMENTAL DESIGN"
APPLIED OPTICS, OSA, OPTICAL SOCIETY OF
AMERICA, WASHINGTON, DC, US, vol. 19, no. 5,
1 mars 1980 (1980-03-01), pages 702-710,
XP000709080 ISSN: 0003-6935**

EP 2 018 688 B1

**Description**

La présente invention se rapporte à un dispositif laser, pompé par diode comprenant un milieu amplificateur et des moyens intra-cavité permettant de rendre l'émission laser monofréquence.

On connaît le document WO 2005/036703 , "Dispositif laser à solide monolithique pompé par diode laser, et procédé mis en oeuvre dans un tel dispositif." , dans lequel on décrit un dispositif laser comprenant un cristal amplificateur découpé selon l'angle de Brewster et un cristal biréfringent de doublage de fréquence. Les cristaux sont disposés de façon à permettre une émission monofréquence.

On connaît également des dispositifs laser dans lesquels on insère un filtre biréfringent ou filtre de Lyot formé par un polariseur et un cristal biréfringent de façon à rendre l'émission laser monofréquence. Dans de tels dispositifs, l'ISL (Intervalle Spectral Libre) du filtre de Lyot est approximativement égal à la largeur de la raie d'émission afin d'être sûr d'avoir un et un unique pic dans la raie d'émission. La largeur du filtre est proportionnelle à l'ISL. Il se peut cependant que la raie d'émission soit trop large (plusieurs nm) et donc que la largeur du filtre soit trop large pour assurer une sélection entre deux modes axiaux consécutifs. Ce peut être le cas du Nd :YVO$_4$ avec sa transition à 1064nm. Il se peut également que le milieu amplificateur possède plusieurs transitions présentant des longueurs d'onde trop proches pour être correctement atténuées par des miroirs dichroïques de la cavité laser. C'est notamment le cas du Nd :YAG avec ses transitions à 1053nm, 1061nm, 1064nm, 1073nm et 1078nm.

US 5 263 038 décrit un laser comprenant deux filtres de Lyot dans une configuration particulière.

La présente invention a pour but de remédier aux inconvénients précités en proposant un nouveau dispositif laser monofréquence très sélectif. Un autre but de la présente invention est de concevoir un dispositif laser permettant de laser à des longueurs d'onde de section efficace d'émission très faible ou de sélectionner une transition parmi plusieurs transitions très proches.

On atteint au moins l'un des objectifs précités avec un dispositif laser continu pompé par diode et comprenant :

- un élément amplificateur,
- au moins deux filtres biréfringents ou filtres de Lyot en intra-cavité permettant une émission laser monofréquence; ces deux filtres de Lyot étant constitués à partir d'un élément polarisant disposé en sandwich entre deux éléments biréfringents; le premier filtre de Lyot possédant une valeur d'Intervalle Spectrale Libre ISL1 sensiblement égale à la largeur de la bande d'émission laser de l'élément amplificateur; et le second filtre de Lyot possédant une valeur d'Intervalle Spectrale Libre ISL2 différente de ISL1.

Le dispositif laser suivant l'invention est doté de miroirs convenablement disposés pour constituer une cavité laser.

En ce qui concerne l'Intervalle Spectral Libre, le bon ordre de grandeur de ISL1 du premier filtre de Lyot est la largeur d'émission $\Delta\lambda_{em}$ du milieu amplificateur (ISL1=k$\Delta\lambda_{em}$ avec 0.5<k<1.5). Cela tend à maintenir un unique pic de transmission du filtre dans la largeur d'émission.

On rappelle que $ISL = \dfrac{\lambda^2}{2\sum \delta n_i e_i}$ où e$_i$ et δn$_i$ sont les épaisseur et les différence d'indice des différentes cristaux biréfringents formant le filtre considéré. Les longueurs d'onde au sommet du filtre sont $\lambda_m = \dfrac{2\sum \delta n_i e_i}{m}$ .

D'une façon générale, la succession de plusieurs éléments biréfringents est équivalente à un élément biréfringent. Il n'est donc pas possible de réaliser plusieurs filtres en ajoutant des cristaux biréfringents d'axes différents. Pour réaliser plusieurs fonctions de filtrage, on a séparé les éléments biréfringents par un élément polarisant. Un laser comportant un unique élément polarisant possède deux zones séparées par un polariseur. Il est donc possible d'insérer deux filtres en positionnant des éléments biréfringents de part et d'autre du polariseur.

L'élément amplificateur peut avantageusement être du Nd :YAG qui possède de bonnes caractéristiques thermiques. On peut aussi utiliser le Nd :YVO$_4$ qui a l'avantage d'une absorption large bande. D'autres ions sont également possibles pour des émissions à des longueurs d'onde différentes.

L'élément polarisant peut être une paire de prisme en YAG ou en silice.

L'élément biréfringent du premier filtre de Lyot peut être un matériau naturel tel que le YVO$_4$ qui possède une forte biréfringence et donc une faible épaisseur, le quartz ou tout autre cristal biréfringent. L'élément biréfringent du second filtre de Lyot peut être l'un des cristaux précités ou un cristal biréfringent non linéaire.

Ce dispositif laser selon l'invention comprend donc deux filtres de Lyot dans une cavité laser contenant un élément polarisant. Un premier filtre de Lyot de l'ordre de grandeur de la raie d'émission et un second filtre de Lyot adapté pour optimiser l'émission monofréquence.

Plus généralement, on peut intégrer n+1 filtres de Lyot dans une cavité contenant n éléments polarisants. Une telle combinaison de deux filtres de Lyot avec des ISL différents permet d'obtenir un filtrage étroit avec un ISL global grand.

Un filtre de Lyot a pour avantage le fait que la longueur d'onde émise est celle dont les pertes sont les plus faibles et donc c'est celle dont la polarisation en sortie du polariseur est parallèle à l'axe de moindre perte. La répartition des puissances entre les deux axes des cristaux biréfringents est donc parfaitement contrôlée et stable.

Avantageusement, les axes des éléments biréfringents sont orientés à 45° par rapport aux axes de l'élément polarisant. Avec un tel dispositif, les cristaux biréfringents peuvent être coupés et disposés de façon à réaliser des accords de phase ("phase matching" en anglais) de type II, sans que le dispositif ne devienne instable.

Selon un mode préférentiel de mise en oeuvre de l'invention, l'élément polarisant comprend une ou deux interfaces de Brewster (interfaces en angle entre deux milieux d'indices de réfraction $n_1$ et $n_2$ tels que la tangente de l'angle est égale au rapport des indices).

En particulier, hormis l'élément polarisant, tous les autres éléments sont de préférence des cristaux à faces parallèles.

Le dispositif selon l'invention peut avantageusement constituer une cavité résonante linéaire monolithique. Les cavités linéaires sont habituellement les plus courtes. Cette faible taille permet une séparation de mode axial le plus large possible, ce qui est bénéfique pour l'efficacité d'un fonctionnement monofréquence. Le design du dispositif peut être tel que chaque élément comprend une face d'entrée et une face de sortie parallèles entre elles et avec les autres faces des autres éléments; ces faces étant orthogonales à la direction de sortie du faisceau laser.

Avantageusement, le milieu amplificateur, l'élément amplificateur, l'élément polarisant et les éléments biréfringents sont optiquement contactés entre eux, ce qui facilite grandement l'obtention d'une émission monofréquence et réduit également les coûts de fabrication. Il n'est donc pas nécessaire d'insérer des éléments focalisants permettant d'ajuster la taille de mode dans les éléments non linéaires.

En complément notamment de ce qui précède, le principe de fonctionnement d'un tel dispositif laser intégrant deux filtres de Lyot peut être défini de la manière ci-après.

Considérons les éléments modifiant la polarisation d'une cavité avec deux filtres. Ce sont les deux cristaux biréfringents et le polariseur. Les matrices de Jones décrivant ces éléments sont $C(\delta) = \begin{pmatrix} e^{i\delta} & 0 \\ 0 & 1 \end{pmatrix}$ pour les éléments biréfringents (dans leurs axes principaux de polarisation, $\delta$ étant le déphasage entre les deux axes) et $P = \begin{pmatrix} 1 & 0 \\ 0 & q^2 \end{pmatrix}$ pour l'élément polarisant. Pour une interface à l'angle de Brewster entre deux milieux d'indices $n_1$ et $n_2$, on a $q^2 = 2n_1 n_2 / (n_1^2 + n_2^2)$. Pour deux interfaces consécutives (cas de deux prismes), il faut prendre cette valeur au carré.

Les deux polarisations propres de la cavité sont solutions de $R_1 C_1 R_1' P R_2 C_2^2 R_2' P R_1' C_1 R_1 e^{2i\varphi} = \mu e^{i(\delta 1 + \delta 2) + 2i\varphi}$ I où $R_i$ et $R_i'$ sont des matrices de rotation et leurs inverses dont les angles correspondent à l'angle entre les axes des cristaux biréfringents et les axes du polariseur, I est la matrice unité et $C_l = C(\delta_i)$. La transmission en intensité de ces modes de polarisation est $T = |\mu|^2$.

La largeur du filtre est la plus faible lorsque les deux éléments biréfringents sont orientés à 45° des axes du polariseur. En particulier, les deux cristaux biréfringents sont orientés à 45° des surfaces de Brewster.

La matrice de Jones correspondant à un aller dans la cavité est alors égale à :

$$M = e^{i\phi}\begin{pmatrix} A & B \\ C & D \end{pmatrix} = e^{i\phi}\begin{pmatrix} (1+q^2)e^{i(\delta_1+\delta_2)} & (1-q^2)e^{i\delta_1} \\ (1-q^2)e^{i\delta_2} & (1+q^2) \end{pmatrix}$$

La matrice d'aller retour vaut alors

$$M_{AR} = e^{i2\phi}\begin{pmatrix} A^2 + B^2 & AC + BD \\ AC + BD & C^2 + D^2 \end{pmatrix}$$

Les sortions de l'équation $M_{AR} = \kappa I$ (où $\kappa$ est réel) donnent les modes de polarisation de la cavité. La valeur de $|\kappa|^2$ correspond aux pertes en intensité de la cavité. Le premier mode à laser est celui dont les pertes sont les plus faibles. La valeur de $\kappa = \mu e^{2i(\phi + \delta 1/2 + \delta 2/2)}$ est solution de

$$\mu^2-b\mu+q^4=0 \text{ où } b=[(1+q^2)^2\cos(\delta_1+\delta_2)+(1-q^2)^2\cos(\delta_1-\delta_2)]/2.$$

La valeur maximale de $\mu$ est obtenue pour la valeur maximale de b. Lorsque $b>q^2$, $\mu$ est réelle.

La transmission est proche de 1 (et donc les pertes sont presque nulles) lorsque $\delta_1(\lambda, T)\approx0$ [$\pi$] et $\delta_1(\lambda,T)+\delta_2(\lambda,T)\approx0$ [$2\pi$]. Comme il est en général difficile de régler $\delta_1$ et $\delta_2$ indépendamment, le point de transmission maximale $\delta_1(\lambda,T)=0$ [$\pi$] et $\delta_1(\lambda,T)+\delta2(\lambda,T)=0$ [$2\pi$] peut ne pas être accessible. Autour de ce point, la transmission maximale peut être obtenue pour $tg(\delta_1) \approx 0$ et $tg(\delta_2) \approx -tg(\delta_1)2q^2/(1+q^4)$.

Comme les phases $\phi$, $\delta_1$ et $\delta_2$ sont, au premier ordre (en négligeant la dépendance en longueur d'onde des indices de réfraction) inversement proportionnelles à la longueur d'onde $\lambda$ ($\phi=a/\lambda$, $\delta_1=a_1/\lambda$ et $\delta_2=a_2/\lambda$), les longueurs d'onde $\lambda_m$ des modes m vérifient $\lambda_m=(2a+a_1+a_2)/2\pi m$. Par ailleurs les coefficients a dépendent de la température, i.e. $a_i(T)=a_{0l}(1+\epsilon_i(T-T_0))$. Par conséquent, les phases $\phi$, $\delta_1$ et $\delta_2$ sont également dépendantes de la température.

Ainsi, selon une caractéristiques avantageuse, le dispositif selon l'invention comprend des moyens de contrôle des températures des filtres de Lyot; ces moyens de contrôle étant adaptés de façon à obtenir dans la bande d'émission la relation suivante : $\delta_1(\lambda,T)\approx0$ [$\pi$] et $\delta_1(\lambda,T)+\delta2(\lambda,T)\approx0$ [$2\pi$]; avec $\delta_1$ et $\delta_2$ les déphasages des premier et second éléments biréfringents à la base des filtres de Lyot respectivement, $\lambda$ la longueur d'onde et T la température. Les températures des différents cristaux peuvent être ajustées indépendamment, ce qui augmente le nombre de degrés de liberté dans les réglages du laser.

Selon une première variante avantageuse de l'invention, le second filtre de Lyot est plus étroit que le premier filtre de Lyot. Ce second filtre de Lyot présente en outre une valeur d'Intervalle Spectrale Libre ISL2 comprise entre la largeur du premier filtre de Lyot et la valeur d'Intervalle Spectrale Libre ISL1 dudit premier filtre de Lyot.

Cette première variante permet d'augmenter la sélectivité du filtrage à l'intérieur de la bande d'une transition laser. En effet, on choisit un premier filtre d'ISL1 de l'ordre de grandeur de la largeur de bande de la transition et un second filtre d'ISL2 plus fin. Ces deux filtres peuvent être accordés en température de manière à trouver une solution de $\delta_1(\lambda,T)=0$ [$\pi$] et $\delta_1(\lambda,T)+\delta2(\lambda,T)=0$ [$2\pi$] (ou de manière équivalente, $\delta_2(\lambda,T)=0$ [$\pi$] et $\delta_1(\lambda,T)+\delta2(\lambda,T)=0$ [$2\pi$]) dans la bande d'émission et dans une fenêtre de température raisonnable (une dizaine de degrés). Dans ce cas, il n'est pas nécessaires de "tilter" les filtres pour les accorder et donc cette solution est compatible avec un design de laser monolithique. L'application est par exemple le filtrage d'un laser Nd :YVO$_4$ pour lequel les transitions sont en général très larges, supérieures ou égales à 3nm.

En d'autres termes, dans cette première variante, on a considéré $a_1<a_2$ (ISL2 < ISL1). Si $a_1/a_2<<1$, il existe une longueur d'onde pour laquelle $\delta_1(\lambda)[\pi]=\eta<<1$ et $\delta_2(\lambda) [\pi]= -2\eta q^2/(1+q^4)$. La valeur de $\eta$ est inférieure à $\pi a_1/2a_2$. Au pic du filtre, la transmission vaut $|\mu|^2 \approx 1 - \eta^2(1- q^4)/(1+q^4)$. Il est donc bon que la valeur de $\eta$ soit la plus petite possible et de préférence inférieure à 0.1 radian. Au-delà de cette valeur, les pertes du filtre dépassent quelques dixièmes de %. La valeur de $\eta$ peut être réduite en modifiant les températures, des cristaux. La modification des températures des cristaux permet également d'ajuster la longueur d'onde de l'un des modes au pic de transmission du filtre.

Selon une seconde variante avantageuse de l'invention, le second filtre de Lyot est plus large que le premier filtre de Lyot de façon à augmenter les pertes des longueurs d'onde indésirables de l'élément amplificateur. ISL2 peut être comprise entre 20 et 200nm. De préférence, l'élément biréfringent du second filtre de Lyot est une lame d'onde (lame dont le déphasage $\delta$ est parfaitement déterminé à une longueur d'onde), par exemple en quartz.

Cette seconde variante s'applique avantageusement à des terres rares qui possèdent en général de nombreuses transitions avec des longueurs d'onde rapprochées. Le double filtrage permet de sélectionner l'une des transitions tout en gardant une sélectivité suffisante à l'intérieur de la bande d'émission afin d'assurer un fonctionnement monofréquence. Ce double filtrage selon la seconde variante permet ainsi d'accéder à de nombreuses longueurs d'onde, même à celles ayant des sections efficaces d'émission faibles. En insérant une lame d'onde en place de l'élément biréfringent correspondant au filtre à grand ISL, un accord en température permet facilement de trouver une solution à $\delta_2(\lambda,T)=0$ [$\pi$] et $\delta_1(\lambda,T)+\delta2(\lambda,T)=0$ [$2\pi$] dans la bande d'émission, car $\delta_2$ varie peu en longueur d'onde et en température et s'annule modulo $\pi$ dans la bande d'émission et $\delta_1$ s'annule également module $2\pi$ dans la bande d'émission si l'ISL est inférieur ou égal à la largeur de bande d'émission.

En d'autres termes et à titre d'exemple, les cavités laser permettant un doublage de fréquence interne présentent de très faibles pertes à la longueur d'onde fondamentale (de l'ordre de 1%). Pour les transitions à 4 niveaux, une inversion de population très faible permet d'atteindre le seuil laser. Cela signifie que le "hole burning spectral" ou saturation sélective en longueur d'onde, permet à deux transitions proches de laser facilement, même si les sections efficaces d'émission sont assez différentes. L'inconvénient à cela est qu'il peut être difficile d'empêcher une transition voisine d'osciller. C'est le cas du laser Nd :YAG, qui, en plus de la transition à 1064 nm, peut osciller simultanément sur les transitions voisines (1053nm, 1061nm, 1064nm, 1073nm voire 1078 nm). L'avantage est qu'il est relativement aisé de faire osciller une transition faible, comme les transitions à 1105nm, 1112 nm ou 1122nm du Nd :YAG. La seconde variante selon la présente invention permet de supprimer des transitions situées de quelques nanomètres à quelques dizaines de nanomètres de la transition sélectionnée.

On sait que l'accordabilité d'un filtre de Lyot en température suit la règle suivante : $\frac{\partial \lambda}{\partial T} = \gamma \lambda$ où y est un facteur intrinsèque au matériau (dont la valeur varie de qq $10^{-5}$ à qq $10^{-4}$). Cette valeur est donc indépendante de la largeur du filtre. Pour une longueur d'onde autour de 1 µm, cela correspond à une accordabilité variant de 20 pm/K à quelques 100 pm/K. Cette accordabilité est donc insuffisante pour couvrir l'ISL d'un filtre dont l'ISL serait supérieure à 20 nm. Il est donc improbable d'obtenir la condition de transmission maximale, $\delta \approx 0$ [n] à la longueur d'onde du laser. Pour ce faire la présente invention préconise d'utiliser une lame d'onde (en général en quartz) pour le filtre à grand ISL. Le déphasage à la longueur d'onde laser est de préférence tel que $\delta = n\pi$. Plus n est grand, plus le filtre est étroit. Cette lame est facilement réalisable avec les techniques standard de fabrication des lames d'onde. L'autre filtre, en principe plus étroit (de l'ordre de 1 nm) peut être accordé en température.

D'autres avantages et caractéristiques de l'invention apparaîtront à l'examen de la description détaillée d'un mode de mise en oeuvre nullement limitatif, et des dessins annexés, sur lesquels :

La figure 1 est une vue en coupe du schéma simplifié d'un dispositif selon l'invention,
La figure 2 est une représentation graphique de courbes de niveau de la transmission en température d'un dispositif selon l'invention dans une première variante de mise en oeuvre,
La figure 3 est une représentation graphique de l'enveloppe de la transmission en fonction de la longueur d'onde dans un dispositif laser selon l'invention dans une seconde variante de mise en oeuvre, et
La figure 4 est une vue détaillée d'un sommet de la courbe de la figure 3.

Le principe du filtre de Lyot est d'introduire un cristal biréfringent entre deux polariseurs. Si un polariseur est inséré dans une cavité laser, il y a deux places disponibles (entre le miroir d'entrée et le polariseur et entre le polariseur et le miroir de sortie) pour insérer le cristal biréfringent et il est donc possible d'introduire deux filtres. Pour introduire plus de deux filtres, il faut ajouter un élément polarisant par filtre supplémentaire.

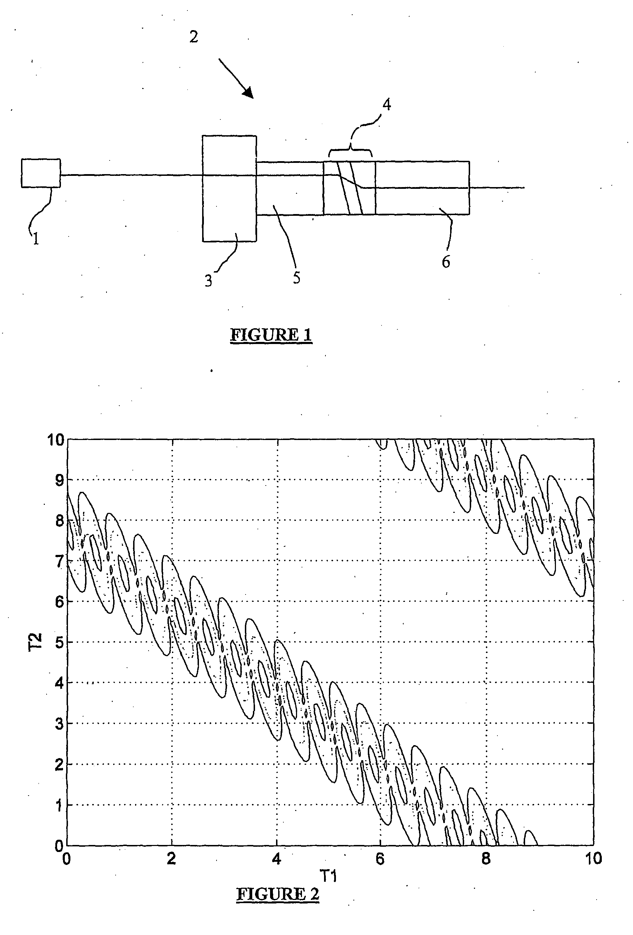

Sur la figure 1 on voit une diode 1 utilisé pour pomper le dispositif laser 2 selon la présente invention. Ce dispositif laser 2 est monolithique et comporte les moyens nécessaires tels que des miroirs dichroïques par exemple permettant de constituer une cavité laser. On distingue :

- un cristal amplificateur 3 de Nd:YAG,
- un cristal 5 de YVO$_4$ ou de quartz ou tout autre cristal biréfringent, dont les axes de biréfringence sont préférentiellement à 45° des axes d'un polariseur 4,
- le polariseur 4 est constitué de deux prismes coupés à l'angle de Brewster, et
- un ou plusieurs cristaux biréfringents 6, de préférence non linéaires, dont les axes sont parallèles, préférablement à 45° des axes de polarisation du polariseur 4.

Le premier filtre de Lyot (ISL1) comprend le cristal biréfringent 5 en association avec le polariseur 4. Le cristal biréfringent 5 est disposé entre l'amplificateur 3 et le polariseur 4.

Le second filtre de Lyot (ISL2) comprend le cristal biréfringent 6 en association avec le polariseur 4. Le cristal biréfringent 6 est disposé en aval du polariseur 4.

La disposition du premier et du second filtres peut être inversée.

Une première variante de la présente invention est la conception d'un double filtrage "fin", ce qui permet d'obtenir l'équivalent d'un filtre étroit avec un ISL grand, supérieur à 1nm.

Cette première variante s'applique avantageusement au cas des lasers dont la largeur de la transition est grande (Nd :YVO$_4$ par exemple) ou dont la longueur de cavité est grande, ce qui nécessite une meilleure sélectivité du filtre.

Pour ce faire, on réaliste un double filtrage de Lyot avec ISL2 inférieur à ISL1 qui est sensiblement égal à la largeur de la raie d'émission. Par exemple, on utilise un premier élément biréfringent 5 formé d'un cristal de YVO$_4$ "a-cut" de 4 mm de long. On utilise un deuxième élément biréfringent 6 constitué d'un cristal de KTP de 2.5 mm coupé pour l'accord de phase du doublage de fréquence de type II (1064 nm → 532 nm).

Chaque filtre de Lyot pris séparément aurait un ISL de 3.1 nm et de 0.78 nm. La valeur de 3.1 nm est de l'ordre de la taille de la raie d'émission et cela assure que le mode filtré aura du gain. La valeur de 0.78 nm (ajustable avec la longueur du cristal de YVO$_4$) permet d'affiner le premier filtre et d'assurer un fonctionnement monofréquence.

La dépendance exacte de la valeur de $\mu^2$ (transmission) en fonction de la température requiert une précision submicrométrique des longueurs des cristaux biréfringents. Ces valeurs varient d'un cristal à l'autre. En revanche, la topographie de $\mu^2(T_1, T_2)$, où $T_1$ et $T_2$ sont les températures des deux cristaux biréfringents, reste la même. La figure 2 montre un exemple du comportement du double filtre de Lyot. Elle illustre la transmission en température du double filtre de Lyot. Les courbes de niveau correspondent à T=0.99, 0.995 et 0.999. Chaque "bulle" correspond à un mode. Le passage d'une "bulle" à une autre fait sauter un mode m vers un mode m+1 ou m-1.

Un fonctionnement monofréquence est assuré si on asservit les températures $T_1$ et $T_2$ sur le maximum d'émission fondamentale. Cela se fait de préférence avec une précision d'asservissement meilleure que 0.5°K (séparation entre deux modes consécutifs).

Une seconde variante de la présente invention est la conception d'un dispositif laser dans lequel on sélectionne une transition parmi plusieurs transitions proches. Cette variante peut avantageusement s'appliquer à un laser jaune (561 nm).

Un laser jaune peut être réalisé grâce au doublage de fréquence de la transition à 1122 nm du Nd :YAG. La transition à 4 niveaux $^4F_{3/2} \rightarrow ^4I_{11/2}$ est à l'origine de 12 transitions, dont la plus intense à 1064 nm. Un premier groupe de transition se trouve entre 1052 nm et 1078 nm et un second groupe se trouve au-delà de 1100 nm : 1105 nm, 1112 nm, 1116 nm et 1122 nm. le premier groupe de longueurs d'onde peut être supprimé grâce au miroir dichroïque. La sélection de l'une des quatre transitions au-delà de 1100 nm (en l'occurrence 1122 nm) se fait préférentiellement avec un filtre de Lyot à grand ISL.

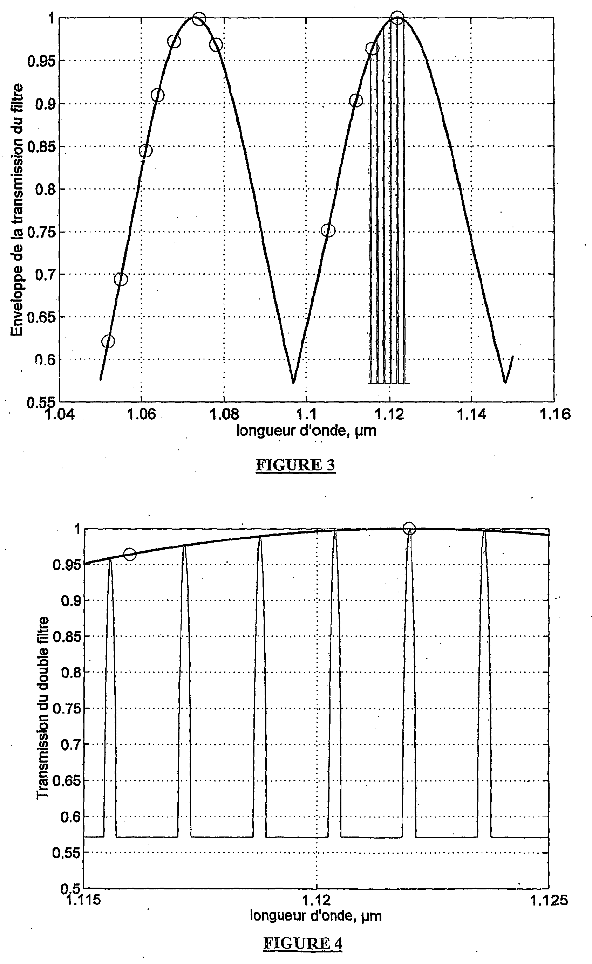

Le cristal doubleur est un KTP de 5 mm. Le doublage de type II impose une rotation des axes à 45° par rapport à l'émission fondamentale et ce cristal non linéaire peut alors servir d'élément biréfringent pour le premier filtre de Lyot. De l'autre côté du polariseur, on introduit une lame d'onde de déphasage égal à $20\pi$ à 1122 nm. Les figures 3 et 4 illustrent la transmission du double filtrage dans la cavité. Il apparaît clairement que le double filtrage élimine les trois transitions du second groupe (1105 nm, 1112 nm et 1116 nm). D'autre part, la finesse du filtrage est bien donnée par la finesse du filtre étroit. Il faut noter que le choix du déphasage de $20\pi$ ne permet pas un filtrage efficace des transitions autour de 1064 nm. Ces dernières sont suffisamment éloignées de 1122 nm pour être filtrées par le miroir dichroïque du laser. Il est également possible de modifier le déphasage (par exemple à $27\pi$) pour filtrer l'ensemble des transitions.

Sur la figure 3, on voit l'enveloppe du filtrage de bande, obtenue en supposant qu'en toute longueur d'onde la phase $\delta_1$ est optimisée pour atteindre la transmission maximale. Autour de 1122nm, la transmission du double filtre est présentée. Les cercles correspondent aux longueurs d'onde des différentes transition du Nd :YAG. La figure 4 illustre un détail du double filtrage autour de la longueur d'onde de 1122nm.

Bien sûr, l'invention n'est pas limitée aux exemples qui viennent d'être décrits et de nombreux aménagements peuvent être apportés à ces exemples sans sortir du cadre de l'invention. On peut par exemple imaginer d'introduire un effet Vernier avec les deux filtres (si l'ISL de l'un ne diffère de l'ISL de l'autre que de la largeur des filtres).

**Revendications**

1. Dispositif laser continu (2) comprenant

   - un élément amplificateur (3),
   - au moins deux filtres biréfringents ou filtres de Lyot en intra-cavité permettant une émission laser monofréquence; ces deux filtres de Lyot étant constitués à partir d'un élément dispose en sandwich entre deux éléments biréfringents (5, 6), le premier filtre de Lyot possédant une valeur d'Intervalle Spectrale Libre ISL1 sensiblement égale à la largeur de la bande d'émission laser de l'élément amplificateur; et le second filtre de Lyot possédant une valeur d'Intervalle Spectrale Libre ISL2 différente de ISL1.

2. Dispositif selon la revendication 1, **caractérisé en ce qu'**il comprend des moyens de contrôle des températures des filtres de Lyot; ces moyens de contrôle étant adaptés de façon à obtenir dans la bande d'émission la relation suivante : $\delta_1(\lambda,T) \approx 0 \ [\pi]$ et $\delta_1(\lambda,T) + \delta_2(\lambda,T) \approx 0 \ [2\pi]$; avec $\delta_1$ et $\delta_2$ les déphasages des premier et second éléments biréfringents à la base des filtres de Lyot respectivement, $\lambda$ la longueur d'onde et T la température.

3. Dispositif selon la revendication 1 ou 2, **caractérisé en ce que** l'élément polarisant comprend une ou deux interfaces de Brewster.

4. Dispositif selon l'une quelconque des revendications 1 à 3, **caractérisé en ce que** les deux éléments biréfringents sont orientés à 45° des axes de l'élément polarisant.

5. Dispositif selon l'une quelconque des revendications précédentes, **caractérisé en ce que**, hormis l'élément polarisant, tous les autres éléments sont des cristaux à faces parallèles.

6. Dispositif selon l'une quelconque des revendications précédentes, **caractérisé en ce qu'**il constitue une cavité résonante linéaire monolithique.

7. Dispositif selon l'une quelconque des revendications précédentes, **caractérisé en ce que** l'élément amplificateur, l'élément polarisant et les éléments biréfringents sont optiquement contactés entre eux.

8. Dispositif selon l'une quelconque des revendications précédentes, **caractérisé en ce que** le second filtre de Lyot est plus étroit que le premier filtre de Lyot; et **en ce que** ce second filtre de Lyot présente une valeur d'Intervalle Spectrale Libre ISL2 comprise entre la largeur du premier filtre de Lyot et la valeur d'Intervalle Spectrale Libre ISL1 dudit premier filtre de Lyot.

9. Dispositif selon la revendication 8, **caractérisé en ce que** l'élément amplificateur est un cristal présentant des transitions laser très larges supérieures ou égales à 3nm.

10. Dispositif selon l'une quelconque des revendications 1 à 7, **caractérisé en ce que** le second filtre de Lyot est plus large que le premier filtre de Lyot de façon à augmenter les pertes des longueurs d'onde indésirables de l'élément amplificateur.

11. Dispositif selon la revendication 10, **caractérisé en ce que** le second filtre de Lyot présente une valeur d'Intervalle Spectrale Libre ISL2 comprise entre 20 et 200nm.

12. Dispositif selon la revendication 10 ou 11, **caractérisé en ce que** l'élément biréfringent du second filtre de Lyot est une lame d'onde (en quartz).

13. Dispositif selon la revendication 12, **caractérisé en ce que** la lame d'onde possède un déphasage $\delta_2$ à la longueur d'onde d'émission tel que $\delta_2 = n\pi$, avec n un entier.

**Claims**

1. Continuous laser device (2) comprising:

   - an amplifying element (3),
   - at least two birefringent filters or intracavity Lyot filters allowing a single-frequency laser emission; these two Lyot filters being constituted by a polarizing element (4) sandwiched between two birefringent elements (5, 6); the first Lyot filter having a Free Spectral Range value FSR1 substantially equal to the laser emission bandwidth of the amplifying element; and the second Lyot filter having a Free Spectral Range value FSR2 different from FSR1.

2. Device according to claim 1, **characterized in that** it comprises means for controlling the temperatures of the Lyot filters; these control means being adapted so as to obtain the following relationship in the emission band: $\delta_1(\lambda,T) \approx 0\ [\pi]$ and $\delta_1(\lambda,T)+\delta_2(\lambda,T) \approx 0\ [2\pi]$; with $\delta_1$ and $\delta_2$ being the phase shifts of the first and second birefringent elements at the base of the Lyot filters respectively, $\lambda$ the wavelength and T the temperature.

3. Device according to claim 1 or 2, **characterized in that** the polarizing element comprises one or two Brewster interfaces.

4. Device according to any one of claims 1 to 3, **characterized in that** the two birefringent elements are orientated at 45° to the axes of the polarizing element.

5. Device according to any one of the preceding claims, **characterized in that**, apart from the polarizing element, all the other elements are crystals with parallel faces.

6. Device according to any one of the preceding claims, **characterized in that** it constitutes a monolithic linear resonant cavity.

7. Device according to any one of the preceding claims, **characterized in that** the amplifying element, the polarizing element and the birefringent elements are optically in contact with each other.

8. Device according to any one of the preceding claims, **characterized in that** the second Lyot filter is narrower than the first Lyot filter; and **in that** this second Lyot filter has a Free Spectral Range value FSR2 comprised between the width of the first Lyot filter and the Free Spectral Range value FSR1 of said first Lyot filter.

9. Device according to claim 8, **characterized in that** the amplifying element is a crystal exhibiting very wide laser transitions greater than or equal to 3 nm.

10. Device according to any one of claims 1 to 7, **characterized in that** the second Lyot filter is wider than the first Lyot filter so as to increase the losses of undesirable wavelengths of the amplifying element.

11. Device according to claim 10, **characterized in that** the second Lyot filter has a Free Spectral Range value FSR2 comprised between 20 and 200 nm.

12. Device according to claim 10 or 11, **characterized in that** the birefringent element of the second Lyot filter is a wave plate (made of quartz).

13. Device according to claim 12, **characterized in that** the wave plate has a phase shift $\delta_2$ at the emission wavelength such that $\delta_2 = n\pi$, with n being an integer.

**Patentansprüche**

1. Dauerstrich-Laservorrichtung (2), wobei diese

   - eine Verstärkereinrichtung (3),
   - wenigstens zwei doppelbrechende Filter bzw. Lyot-Filter im Resonator, eine Monofrequenzlaseremission ermöglichend, umfasst, wobei die zwei Lyot-Filter aus einem polarisierenden, zwischen zwei doppelbrechenden Elementen (5, 6) parallel angeordneten Element (4) bestehen, wobei der erste Lyot-Filter einen freien Spektralbereich FSR1 aufweist, der in etwa der Laseremissionsbandbreite der Verstärkereinrichtung (3) entspricht, und wobei der zweite Lyot-Filter einen von FSR1 abweichenden Spektralbereich FSR2 aufweist.

2. Vorrichtung nach Anspruch 1, **gekennzeichnet dadurch, dass** einige Mittel zur Kontrolle der Temperaturen der Lyot-Filter vorgesehen sind; wobei diese Kontrollmittel so angepasst sind, dass in der Emissionbandbreite folgende Gleichung erzielt wird: $\delta_1(\lambda, T) \approx 0$ [n] und $\delta_1 (\lambda, T) + \delta_2 (\lambda, T) \approx 0$ [2n] ; mit $\delta_1$ und $\delta_2$ die Kennzahlen für die Phasenverschiebung des ersten und des zweiten doppelbrechenden Elements, woraus die jeweiligen Lyot-Filter bestehen, und mit $\lambda$ die Wellenlänge und T die Temperatur.

3. Vorrichtung nach Anspruch 1 oder 2, **dadurch gekennzeichnet, dass** das polarisierende Element ein oder zwei Brewster-Fenster umfasst.

4. Vorrichtung nach einem der vorhergehenden Ansprüche 1 bis 3, **dadurch gekennzeichnet, dass** beide doppelbrechende Elemente in einem 45°-Winkel zu den Achsen des polarisierenden Elements angeordnet sind.

5. Vorrichtung nach einem der vorhergehenden Ansprüche, **dadurch gekennzeichnet, dass** außer dem polarisierenden Element alle anderen Elemente planparallele Kristalle sind.

6. Vorrichtung nach einem der vorhergehenden Ansprüche, **dadurch gekennzeichnet, dass** sie eine monolithische, lineare Resonatorkavität bildet.

7. Vorrichtung nach einem der vorhergehenden Ansprüche, **dadurch gekennzeichnet, dass** die Verstärkereinrichtung, das polarisierende Element und die doppelbrechenden Elemente untereinander optisch berührt werden.

8. Vorrichtung nach einem der vorhergehenden Ansprüche, **dadurch gekennzeichnet, dass** der zweite Lyot-Filter schmäler als der erste Lyot-Filter ist; und **dadurch**, dass dieser zweite Lyot-Filter einen freien Spektralbereich FSR2 aufweist, der zwischen der Breite des ersten Lyot-Filters und dem freien Spektralbereich FSR1 des besagten ersten Lyot-Filters liegt.

9. Vorrichtung nach Anspruch 8, **dadurch gekennzeichnet, dass** die Verstärkereinrichtung aus einem Kristall besteht, der sehr breite Laserübergänge über oder gleich 3nm aufweist.

10. Vorrichtung nach einem der vorhergehenden Ansprüche 1 bis 7, **dadurch gekennzeichnet, dass** der zweite Lyot-Filter breiter als der erste Lyot-Filter ausgebildet ist, um die Verluste der unerwünschten Wellenlängen der Verstärkereinrichtung zu erhöhen.

11. Vorrichtung nach Anspruch 10, **dadurch gekennzeichnet, dass** der zweite Lyot-Filter einen freien Spektralbereich FSR2 zwischen 20 und 200nm aufweist.

12. Vorrichtung nach Anspruch 10 oder 11, **dadurch gekennzeichnet, dass** das doppelbrechende Element des zweiten Lyot-Filters eine Wellenplatte (aus Quarz) ist.

13. Vorrichtung nach Anspruch 12, **dadurch gekennzeichnet, dass** die Wellenplatte eine Phasenverschiebung $\delta_2$ an der Emissionswellenlänge aufweist, sodass $\delta_2 = n\Pi$ mit n eine natürliche Zahl.

FIGURE 1

FIGURE 2

**FIGURE 3**

**FIGURE 4**

**EP 2 018 688 B1**

**Documents brevets cités dans la description**

- WO 2005036703 A
- US 5263038 A